**Europäisches Patentamt**

**European Patent Office**

**Office européen des brevets**

Veröffentlichungsnummer: **0 309 640**

**A1**

# EUROPÄISCHE PATENTANMELDUNG

Anmeldenummer: **88106338.2**

Int. Cl.⁴: **B01J 47/02 , C02F 1/42**

Anmeldetag: **20.04.88**

In der ursprünglich eingereichten Anmeldung ist eine Ausstellungspriorität vom 20.4.1987 beansprucht, die nicht anerkannt wird. Die Entscheidung darüber ist noch nicht rechtskräftig.

Priorität: **20.07.87 YU 1364/87**

Veröffentlichungstag der Anmeldung:
**05.04.89 Patentblatt 89/14**

Benannte Vertragsstaaten:
**AT BE CH DE FR GB IT LI NL SE**

Anmelder: **Zmazek, Stanko**
**Susedgrad-Tratina 7**
**YU-41090 Zagreb(YU)**

Erfinder: **Zmazek, Stanko**
**Susedgrad-Tratina 7**
**YU-41090 Zagreb(YU)**

Vertreter: **Winter, Konrad Theodor, Dipl.-Ing.**
**et al**
**Patentanwaltsbüro Tiedtke- Bühling- Kinne-**
**Grupe- Pellmann- Grams- Struif- Winter-**
**Roth Bavariaring 4**
**D-8000 München 2(DE)**

**Vorrichtung für eine verbesserte Verbindung und bessere Ausnutzung von Ionenaustauschern im Aufbereitungsverfahren für Brauchwasser.**

Die Vorrichtung für eine verbesserte Verbindung und bessere Ausnutzung von Ionenaustauschern im Aufbereitungsverfahren für Brauchwasser ermöglicht den Serienverbund von Austauschern, so dass, nachdem das Wasser aus dem ersten Austauscher bis zur oberen, den technologischen Anforderungen genügende, Härtegrenze kommt, es nicht notwendig wird, den Austauscher aus dem Verfahren auszuschliessen, um ihn zu regenerieren, sondern es wird durch den zusätzlichen Einbau von Ventilen (1, 2 und 3) am ersten Austauscher und den Ventilen (1o, 11 und 12) am zweiten sowie den Ventilen (19, 2o und 21) am dritten Austauscher das Anschliessen des zweiten Austauschers im Serienverbund möglich und damit die äusserste Enthärtung des Wassers in den erlaubten Grenzen, bei verringerter Belastung des zweiten Austauschers,erreicht; denn ein Teil der Wasserhärte wird bereits im ersten Austauscher gemindert.

Das Wasser aus dem ersten Austauscher ist nicht genügend enthärtet, so dass es im weiteren Verfahren wegen zu grosser Härte nicht verwendet werden kann. Aber nach dem Durchlauf durch den zweiten Austauscher entspricht der Härtegrad den Anforderungen.

Die Ionenaustauscher sind besser ausgenutzt, das Regenerationsverfahren ist seltener und die Kosten der Regeneration geringer sowie der Wasserverbrauch für das Ausspülen.

## VORRICHTUNG FÜR EINE VERBESSERTE VERBINDUNG UND BESSERE AUSNUTZUNG VON IONENAUS-TAUSCHERN IM AUFBEREITUNGSVERFAHREN FÜR BRAUCHWASSER

### EINORDNUNG DER ERFINDUNG IN DEN ENTSPRECHENDEN TECHNIKBEREICH

Der Gegenstand der Erfindung fällt in den Bereich der Bearbeitung und Verarbeitung und besonders in den Bereich chemischer und physikalischer Verfahren sowie entsprechender Vorrichtungen. Die internationale Patent-Klassifikation sieht für den Gegenstand der Erfindung das Klassifikationssymbol B ol J 4/oo vor. Das ist das Zeichen für Einfüllvorrichtungen.

### TECHNISCHES PROBLEM

Das technische Problem, das durch diese Erfindung gelöst wird, ist folgendes: wie soll die Vorrichtung für eine verbesserte Verbindung und bessere Ausnutzung von Ionenaustauschern im Aufbereitungsverfahren für Brauchwasser aussehen, so dass die Nutzungsmöglichkeit von zwei Ionenaustauschern im Serienverbund in dem Moment gegeben ist, wenn die Masse eines Austauschers gesättigt ist und die Wasserhärte nicht unter die vorgegebene obere Härtegrenze gesunken ist. Bei dem Durchlauf des Wassers durch den ersten Austauscher enthärtet das Wasser teilweise und im zweiten Serienverbundaustauscher wird eine zusätzliche Enthärtung des Wassersunter die vorgegebene obere Härtegrenze durchgeführt. Im dritten Austauscher wird in der Zeit eine Regeneration der Masse vorgenommen, oder er bleibt in Reserve.

### STAND DER TECHNIK

Ionenaustauscher sind mit bestimmten massegesättigten Mitteln gefüllte Metallbehälter. Bei dem Durchlauf von hartem Wasser durch den Austauscher kommt es zu einem Ionenaustausch zwischen Masse und Wasser, wodurch die Wasserhärte gemindert wird (Verringerung von Mineralstoffen im Wasser).

Das so enthärtete Wasser findet in technologischen Prozessen Verwendung (Kraftwerke, Färbereien usw.). Bei der Wasserenthärtung kommt es im Ionenaustauscher zur Sättigung derMasse, weshalb es notwendig wird, sie durch ein Regenerationsverfahren in den Anfangszustand zurückzuführen. Das Wasserenthärtungsverfahren ist ein diskontinuierlicher Prozess, der am Anfang die besten Ergebnisse bringt. Danach erhöht sich der Härtegrad des Wassers bis zur oberen Härtegrenze, die durch das technologische Verfahren definiert ist. Nachfolgend wird die Arbeit des Austauschers durch Schliessen der Ventile des Austauschers aus dem Wasserenthärtungsverfahren unterbrochen und es beginnt das Regenerationsverfahren. Das Regenerationsverfahren besteht darin, dass die Masse des Austauschers mit einem bestimmten Lösungsmittel ausgespült wird, so dass ein Ionenaustausch in der Masse stattfindet.

Nach Sättigung der Masse wird der Austauscher mit Wasser ausgespült, um Reste des Regenerationsmittels zu entfernen.

Es ist üblich, dass der Austauscher diskontinuierlich arbeitet, d.h., dass das Verfahren durch den regenerierten Austauscher bis zur Sättigung und Erreichung der oberen Härtegrenze des Wassers, entsprechend den vorgeschriebenen technologischen Anforderungen, geführt wird. Danach wird die Regeneration des Austauschers vorgenommen. Am häufigsten sind 3 Austauscher installiert: einer enthärtet, der zweite wird regeneriert und der dritte ist in Reserve.

Bei der Erfindung, die hier angemeldet wird, ist es mit Hilfe der Verbindungselemente (Rohre und Ventile) möglich, das Wasserenthärtungsverfahren auf die Weise durchzuführen, dass der erste Austauscher nach seiner Sättigung angeschlossen bleibt und das Wasser daraus in den zweiten Austauscher geleitet wird. Im ersten Austauscher ist das Wasser teilweise enthärtet und im zweiten liegt der Härtegrad unter der oberen Grenze. So ist erreicht, dass die Belastung des zweiten Austauschers geringer ist, weil die Enthärtung bis zu einem gewissen Grad im ersten Austauscher stattfindet. Der dritte Austauscher befindet sich in der Zeit in der Regeneration oder in Reserve. Die Vorrichtung ist aus Ventilen und Rohren ausgeführt, die montiert sind, wie es bei solch einer installierten Vorrichtung üblich ist.

### BESCHREIBUNG DER TECHNISCHEN PROBLEMLÖSUNG

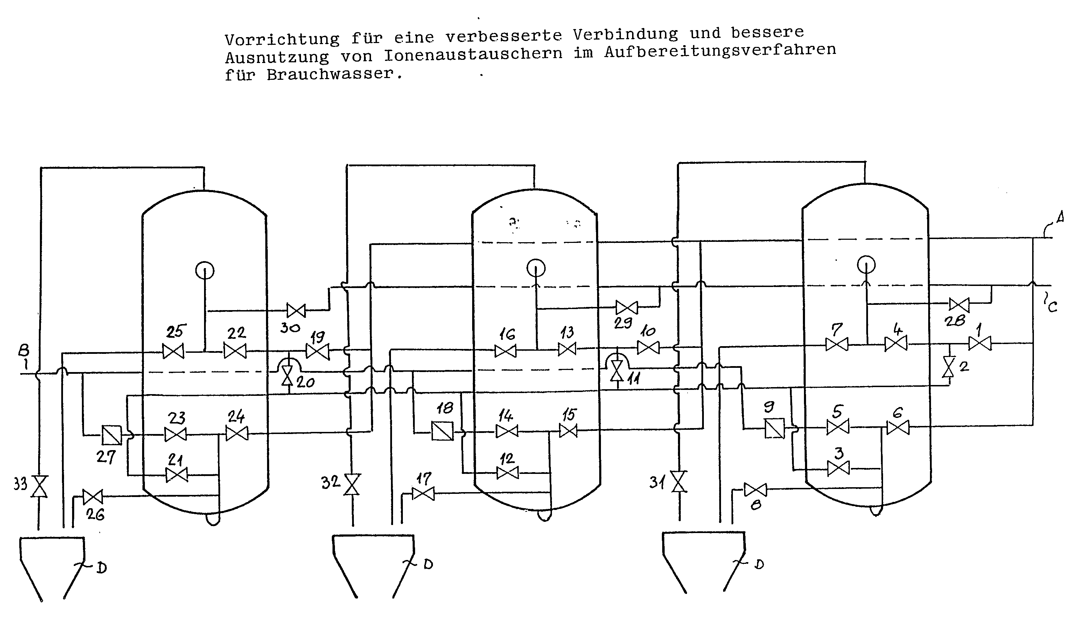

Im Bild 1 ist die schematische Verbindung der Vorrichtung für eine verbesserte Verbindung und bessere Ausnutzung von Ionenaustauschern im Aufbereitungsverfahren für Brauchwasser dargestellt.

Das zu enthärtende Wasser wird durch die Rohrleitung A zugeleitet und das enthärtete Wasser durch die Rohrleitung B abgeleitet. Durch die Rohrleitung C wird das Regenerationsmittel zugeführt und D dient als Kanalabfluss.

Der gebräuchliche Vorgang im Wasserenthärtungsverfahren ist folgender: an der Markierung A, am ersten Austauscher, sind die Ventile 4 und 5 geöffnet, während die Ventile 6 und 7 geschlossen sind. Die Ventile 1, 2 und 3 sind nicht eingebaut. Ventil 8 ist geschlossen und dient zur Entleerung der Flüssigkeit aus dem Austauscher. Ventil 28 ist geschlossen und dient der Zuleitung von Regenerationsmitteln. Ventil 31 ist geschlossen und ist für die Entlüftung des Austauschers vorgesehen. Der Durchlaufmesser 9 dient der Mengenmessung des enthärteten Wassers.

Der Einbau der Ventile 1, 2 und 3 am ersten Austauscher sowie der Ventile 1o, 11 und 12 am zweiten und 19, 2o und 21 am dritten Austauscher, ermöglicht die Verfahrensführung durch zwei Austauscher im Serienverbund, so dass durch das Öffnen der Ventile 1, 4 und 3 am ersten Austauscher, das Schliessen der Ventile 2,5,6,7 und 8 und das Öffnen der Ventile 11, 13 und 14 am zweiten Austauscher,bei geschlossenen Ventilen 1o, 12, 15, 16, und 17,der Durchlauf des zu enthärtenden Wassers durch beide Austauscher geleitet wird. Die Menge des enthärteten Wassers wird mit Hilfe des Durchlaufmessers 18 festgestellt.

Die gleichen Kombinationen werden für den Verbund von anderen Austauscherpaaren durchgeführt.

Für die Anwendung der Vorrichtung für eine verbesserte Verbindung und bessere Ausnutzung von Ionenaustauschern im Aufbereitungsverfahren für Brauchwasser ist keine besondere Ausbildung und Anleitung erforderlich, ausser den gegebenen in der Anmeldung und der Ausbildung, über die ein durchschnittlicher Maschinenmonteur verfügt. Es ist nur auf die Durchführung des Verfahrens zu achten, damit die Regeneration des Austauschers nach dem tatsächlichen Bedarf so rational wie möglich durchgeführt wird,und dass gleichzeitig der Durchlauf von härterem Wasser, als es den Anforderungen des technologischen Verfahrens entspricht, verhindert wird.

Die Vorrichtung für eine verbesserte Verbindung und bessere Ausnutzung von Ionenaustauschern im Aufbereitungsverfahren für Brauchwasser ermöglicht den Serienverbund von Austauschern, so dass, nachdem das Wasser aus dem ersten Austauscher bis zur oberen, den technologischen Anforderungen genügende, Härtegrenze kommt, es nicht notwendig wird, den Austauscher aus dem Verfahren auszuschliessen, um ihn zu regenerieren, sondern es wird durch den zusätzlichen Einbau von Ventilen (1, 2 und 3) am ersten Austauscher und den Ventilen (1o, 11 und 12) am zweiten sowie den Ventilen (19, 2o und 21) am dritten Austauscher das Anschliessen des zweiten Austauschers im Serienverbund möglich und damit die äusserste Enthärtung des Wassers in den erlaubten Grenzen, bei verringerter Belastung des zweiten Austauschers.erreicht; denn ein Teil der Wasserhärte wird bereits im ersten Austauscher gemindert.

Das Wasser aus dem ersten Austauscher ist nicht genügend enthärtet, so dass es im weiteren Verfahren wegen zu grosser Härte nicht verwendet werden kann. Aber nach dem Durchlauf durch den zweiten Austauscher entspricht der Härtegrad den Anforderungen.

Die Ionenaustauscher sind besser ausgenutzt, das Regenerationsverfahren ist seltener und die Kosten der Regeneration geringer sowie der Wasserverbrauch für das Ausspülen.

## Ansprüche

Die Vorrichtung für eine verbesserte Verbindung und bessere Ausnutzung von Ionenaustauschern im Aufbereitungsverfahren für Brauchwasser, bei der ein Serienverbund von Austauschern ermöglicht wird und damit eine bessere Ausnutzung der Austauscher gegeben ist, weil mehr Zeit zwischen den einzelnen Regenerationen zur Verfügung steht und der Gebrauch von Regenerationsmitteln verringert wird, ist **dadurch gekennzeichnet**, dass Ventil (1) in das Zuleitungsrohr und Ventil (2) und Ventil (3) in das Verbindungsrohr des ersten Austauschers, Ventil (1o) am Zuleitungsrohr und Ventil (11) und Ventil (14) am Verbindungsrohr des zweiten Austauschers, Ventil (19) an der Zuleitung und Ventil (2o) und Ventil (21) am Verbindungsrohr des 3 Austauschers eingebaut ist.

Vorrichtung für eine verbesserte Verbindung und bessere
Ausnutzung von Ionenaustauschern im Aufbereitungsverfahren
für Brauchwasser.

EP 0 309 640 A1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | CH-A- 313 777 (SULZER) <br> * Seite 3, Zeile 67 - Seite 4, Zeile 20 * | 1 | B 01 J 47/02 <br> C 02 F 1/42 |
| X | FR-A- 603 770 (FRECHOU) <br> * Seite 1, Zeilen 22-26; Seite 2, Zeilen 7-74 * | 1 | |
| X | AU-B- 531 645 (C.R.A. SERVICES LTD) <br> * Seite 4, Zeile 22 - Seite 9, Zeile 17; Seite 10, Zeile 1 - Seite 16, Zeile 23 * | 1 | |
| X,0 | Austellung "INOVA 87" in Zagreb (YU) den 20.4.1987 | 1 | |

RECHERCHIERTE SACHGEBIETE (Int. Cl.4)

B 01 J

Der vorliegende Recherchenbericht wurde für alle Patentansprüche erstellt

| Recherchenort | Abschlußdatum der Recherche | Prüfer |
|---|---|---|
| DEN HAAG | 05-01-1989 | WENDLING J.P. |